# EUROPÄISCHE PATENTSCHRIFT

(11) **EP 2 674 824 B1**
(45) Veröffentlichungstag und Bekanntmachung des Hinweises auf die Patenterteilung: **20.05.2015**
(21) Anmeldenummer: 12171987.6
(22) Anmeldetag: 14.06.2012
(51) Int. Cl.: G05B 19/05, G06F 12/06

(54) **Verfahren und industrielle Automatisierungskomponente zur indirekten Adressierung von Speicher**
Method and industrial automation component for indirect addressing of memory
Procédé et composant d'automatisation industriel pour l'adressage indirect de mémoire

(43) Veröffentlichungstag der Anmeldung: 18.12.2013
(73) Patentinhaber: Siemens Aktiengesellschaft, 80333 München (DE)
(72) Erfinder: Schuh, Tobias, 90766 Fürth (DE)

(56) Entgegenhaltungen:
- DE-A1- 19 737 182
- Unbekannter Autor: "SPS Grundlagen Seite 2", Gersch SPS-Technik , 21. Dezember 2009 (2009-12-21), XP002684072, Gefunden im Internet: URL:http://www.sps.ag/kategorie/sps-grundl agen/page/2/ [gefunden am 2012-09-25]

## Beschreibung

Die Erfindung betrifft ein Verfahren für die indirekte Adressierung einer Anzahl Zellen eines Speichers gemäß dem Oberbegriff des Patentanspruchs 1, und eine Automatisierungskomponente zum Einsatz in einer industriellen Automatisierungsanordnung zur Durchführung des Verfahrens gemäß dem Oberbegriff des Patentanspruchs 13.

Für lesende oder schreibende Zugriffe auf Speicherzellen einer Mikroprozessor-Architektur werden von Programmen Adressen verwendet, die beispielsweise durch Variablen abgebildet werden. Neben der direkten Benennung von Variablen oder anderen Arten von Adressen wird oft auch eine indirekte Adressierung verwendet, wobei ein solcher Speicherzugriff nicht direkt die betreffende Zelle(n) eines Speichers referenziert, sondern die Zellen(n), auf die der Speicherzugriff verweist, mittels anderer Variablen erst zur Laufzeit des Programms ermittelt werden. Insbesondere bei der Erstellung von Programmen für speicherprogrammierbare Steuerungen (SPS) wird bei komplexen Programmen häufig die indirekte Adressierung genutzt. Dies bedeutet, dass die Adresse des referenzierten Speicherbereichs bzw. der referenzierten Zellen des Speichers erst während der Ausführung eines Programms bestimmt oder gebildet werden, beispielsweise als Index-Nummer einer indizierten Variablen oder als sog. "String" eines textbasierten Variablen-Namens. Die endgültigen Adressen für Speicherzugriffe stehen daher erst zur Laufzeit, nicht aber schon bei der Erstellung eines Programms für die speicherprogrammierbare Steuerung zur Verfügung.

Bei den für speicherprogrammierbare Steuerungen verwendeten Programmiersprachen, z.B. AWL (Anweisungsliste) oder SCL (Structured Control Language), hat ein Programmierer die Möglichkeit, eine indirekte Adressierung auf Speicherbereiche von Datenbausteinen, physikalischen Eingängen, physikalischen Ausgängen und sog. "Merkern" (global adressierbare Speicherbereiche) vorzusehen. Die Verwendung der indirekten Adressierung ist dabei jedoch fallweise mit Nachteilen verbunden. So sind beispielsweise nur schwer oder überhaupt keine sog. "Querverweise" zum Programmierzeitpunkt festzustellen, d.h., dass eine Übersicht der Zugriffe auf eine bestimmte Adresse oder Speicherzelle zum Programmierzeitpunkt oft nicht mit der nötigen Exaktheit gebildet werden kann, weil die eigentlichen Adressen erst zur Laufzeit des Programms generiert werden. Es kann also kaum nachvollzogen werden, ob und welche Speicherbereiche durch eine indirekte Adressierung manipuliert werden, und welche nicht. Weiter tritt ein sog. "Absicherungs-Problem" auf, d.h., dass bei der Bildung der Adressen zur Laufzeit durch zusätzliche Maßnahmen sichergestellt werden muss, dass nicht irrtümlich auf nicht-valide bzw. nicht existente Speicherbereiche zugegriffen wird, was einen Fehler zur Laufzeit zur Folge hätte. Bezüglich der physikalischen Schnittstellen, insbesondere bezüglich der Steuerungs-Ausgänge, können zur Laufzeit ungewollt Zugriffe auf solche Ausgänge gebildet werden, die entweder nicht existent sind oder nur von anderen Programmteilen oder anderen Subroutinen manipuliert werden dürfen.

Es ist daher eine Aufgabe der vorliegenden Erfindung, insbesondere für speicherprogrammierbare Steuerungen die indirekte Adressierung von Speichern zu optimieren.

Aus der Druckschrift DE 197 37 182 A1 ist bekannt, einen Speicher einer Automatisierungskomponente einer industriellen Automatisierungsanordnung in Blöcken zu organisieren. Bei der hierdurch entstehenden Struktur können die Blöcke dann als Ganzes indirekt adressiert werden.

Es ist dabei eine Kernidee der Lösung der Aufgabe, dass bereits zum Programmierzeitpunkt eine Tabelle oder eine anderweitige Zuordnung festgelegt wird, in der diejenigen Adressen verzeichnet sind, die der indirekten Adressierung zugänglich sein sollen. Durch Zugriff auf diese Zuordnung, die beispielsweise anhand einer indizierten Variablen erfolgen kann, soll dann zur Laufzeit die physikalische Adresse oder eine zugeordnete Variable des gewünschten Speicherbereichs bzw. der gewünschten Speicherzellen ermittelt werden, so dass Zugriffe auf andere Speicherzellen mittels der indirekten Adressierung sicher verhindert werden können.

Die Aufgabe wird insbesondere durch ein Verfahren gemäß dem Patentanspruch 1 gelöst, wobei ein Verfahren für die indirekte Adressierung einer Anzahl Zellen eines Speichers durch ein Programm einer Automatisierungskomponente in einer industriellen Automatisierungsanordnung vorgeschlagen wird, bei der für einen Zugriff auf die Anzahl Zellen des Speichers die zugehörige Adresse zur Laufzeit des Programms ermittelt wird. Dabei wird im Zuge einer Erstellung des Programms eine Zuordnung einer Struktur zu zumindest einem Teil der vom Programm verwendbaren Adressen erstellt und gespeichert, wobei zur Laufzeit durch das Programm für einen Zugriff auf die Anzahl Zellen des Speichers in einem ersten Schritt ein betreffendes Element der Struktur ermittelt wird, in einem zweiten Schritt aus der gespeicherten Zuordnung die dem ermittelten Element zugeordnete Adresse ausgelesen wird, und in einem dritten Schritt mittels der Adresse auf die Anzahl Zellen des Speichers zugegriffen wird. Durch die indirekte Adressierung mittels der vorher gespeicherten und festgelegten Zuordnung kann zuverlässig ein aus einer ungültigen indirekten Adressierung resultierender falscher Speicherzugriff vermieden werden. Außerdem wird die Bildung der indirekten Adressen durch das Programm vereinfacht, weil die fallweise auch komplexen alphanumerischen Variablen-Namen, die als Adressen verwendet werden, nicht als Text gebildet werden müssen, sondern über eine Indizierung mittels der Zuordnung aufgerufen werden können.

Die Aufgabe wird weiterhin durch eine Automatisierungskomponente gemäß dem Patentanspruch 13 gelöst, wobei eine Automatisierungskomponente zum Einsatz in einer industriellen Automatisierungsanordnung vorgeschlagen wird, wobei die Automatisierungskomponente für die indirekte Adressierung einer Anzahl Zellen eines Speichers durch ein Programm eingerichtet ist. Dabei ist die Automatisierungskomponente zur Ausführung des ersten, zweiten und dritten Schritts in dem vorstehend beschriebenen Verfahren eingerichtet. Durch eine solche Automatisierungskomponente lassen sich die in dem Zusammenhang mit dem Verfahren beschriebenen Vorteile realisieren.

Vorteilhafte Ausgestaltungen des erfindungsgemäßen Verfahrens sind in den abhängigen Patentansprüchen 2 bis 12 angegeben; die dabei beschriebenen Merkmale und deren Vorteile gelten sinngemäß auch für die erfindungsgemäße Automatisierungskomponente. Ebenso gilt die im abhängigen Patentanspruch 14 beschriebene vorteilhafte Ausgestaltung der Automatisierungskomponente sinngemäß auch für das erfindungsgemäße Verfahren.

In einer vorteilhaften Ausgestaltung wird mit einem Zugriff auf die Anzahl Zellen des Speichers anstelle oder zusätzlich ein physikalischer Eingang oder anstelle oder zusätzlich ein physikalischer Ausgang der Automatisierungskomponente oder einer mit der Automatisierungskomponente verknüpften Ein-/Ausgabeeinheit gelesen oder gesetzt. Dies hat zum Vorteil, dass die Zugriffe auf Schnittstellen einer Automatisierungskomponente durch entsprechende Einträge in der Zuordnung reglementiert werden können, so dass andere Ein-/Ausgänge nicht irrtümlich zur Laufzeit adressiert werden können.

Eine besonders universelle Anwendbarkeit des Verfahrens ergibt sich, wenn als Adresse eine Variable verwendet wird, die die gewünschten Zellen des physikalischen Speichers oder andere Adressen referenziert. Dies hat zum Vorteil, dass die Variablen gleichzeitig auch einer direkten Adressierung zur Laufzeit zugänglich sind, so dass dieselben Speicherzellen sowohl indirekt als auch direkt adressiert werden können. Außerdem führt das dazu, dass sowohl die Variable mit einem "Klarnamen", der also eine sinnfällige Bedeutung hat, weiterhin verwendet werden kann, als auch eine einfache Generierung des Zugriffs über die indirekte Adressierung zur Laufzeit möglich ist. Dabei wird die Zugriffssicherheit erhöht, wenn ein direkter Zugriff des Programms oder zumindest von Teilen des Programms auf die in der Zuordnung referenzierten Adressen sperrbar ist, womit beispielsweise der direkte Zugriff auf Variablen oder anderer Adressen bei sicherheitskritischen Speicherzellen, insbesondere Ein-/Ausgängen, fallweise verhindert werden kann.

Vorteilhaft werden der zweite und der dritte Schritt des Verfahrens durch ein Betriebssystem oder durch eine Firmware der Automatisierungskomponente durchgeführt, so dass die Abwicklung der indirekten Adressierung nicht im Programm selbst vorgesehen werden muss.

Eine besonders übersichtliche und datentechnisch gute handhabbare Zuordnung ergibt sich, wenn als Zuordnung eine Matrix verwendet wird, insbesondere eine zweidimensionale Matrix. Dabei wird vorteilhaft als die Struktur eine Anzahl Elemente einer indizierten Variablen oder eines eindimensionalen Arrays verwendet, der in einer zweiten Spalte und/oder Zeile der Matrix die mittels der Zuordnung erreichbaren Adressen, Variablen oder Bezeichner der Speicherzellen gegenübergestellt werden.

Ein strukturiertes Zugriffskonzept lässt sich leicht in die Realität umsetzen, indem innerhalb der Zuordnung die Variablen zu mehren Gruppen gruppiert werden und/oder mehrere Zuordnungen, die jeweils eine Gruppe darstellen, verwendet werden. Damit ist es möglich, gruppen-granular Rechte für die Adressierung und Rechte für die Art eines Zugriffs (z.B. Lesen oder Schreiben) festzulegen. Besonders übersichtlich wird die Rechteverwaltung, indem jede Gruppe zumindest ein separates eindimensionales Array als Struktur umfasst. Die Bezeichner der ggf. identifizierten Elemente von solchen eindimensionalen Arrays sind auch in einem Automatisierungsprogramm leicht erzeugbar. Insbesondere mittels der Gruppierung lässt sich nicht nur die Zugriffsberechtigung von verschiedenen Gruppen von Speicherzellen bzw. Adressen einstellen, sondern die Zugriffsberechtigung kann sich vorteilhaft auch auf zumindest eine Funktion, einen Programmbaustein oder einen anderen Programmteil beziehen, wobei nur der jeweiligen Gruppe zugeordnete Funktionen, Programmbausteine oder Programmteile für einen definierten Zugriff auf die der Gruppe zugehörigen Adressen zugelassen sind. Dazu ist es vorteilhaft auch möglich, die Zuordnung um eine weitere Spalte oder Zeile zu erweitern, in der jeweils die berechtigten Programmteile, Programmbausteine oder Funktionen mit ihrer jeweiligen Berechtigungsart (z.B. Lesen und/oder Schreiben) bereits zum Programmierzeitpunkt Adressen-granular festgelegt werden können.

In einer besonders vorteilhaften Ausgestaltung der Erfindung ist es möglich, die Struktur in einem Datenbaustein oder ähnlichen Objekt des Programms zu speichern. Dies hat den Vorteil, dass Datenbausteine bereits bei bekannten Programmiersystemen für speicherprogrammierbare Steuerungen bekannt sind, so dass deren Speicherung und Bearbeitung mit bekannten Mitteln erfolgen können.

Ein Ausführungsbeispiel des erfindungsgemäßen Verfahrens wird nachfolgend anhand der Zeichnung erläutert; es dient gleichzeitig der Erläuterung eines Ausführungsbeispiels einer erfindungsgemäßen Automatisierungskomponente.

Dabei zeigen:
- Figur 1: zwei Gruppen mit Zuordnungen zwischen jeweils einer Struktur aus indizierten Variablen und Speicherbereichen, und
- Figur 2: Zugriffe auf Speicherbereiche mittels eines variablen Index' im Beispiel einer grafisch orientierten Programmiersprache für Speicherprogrammierbare Steuerungen.

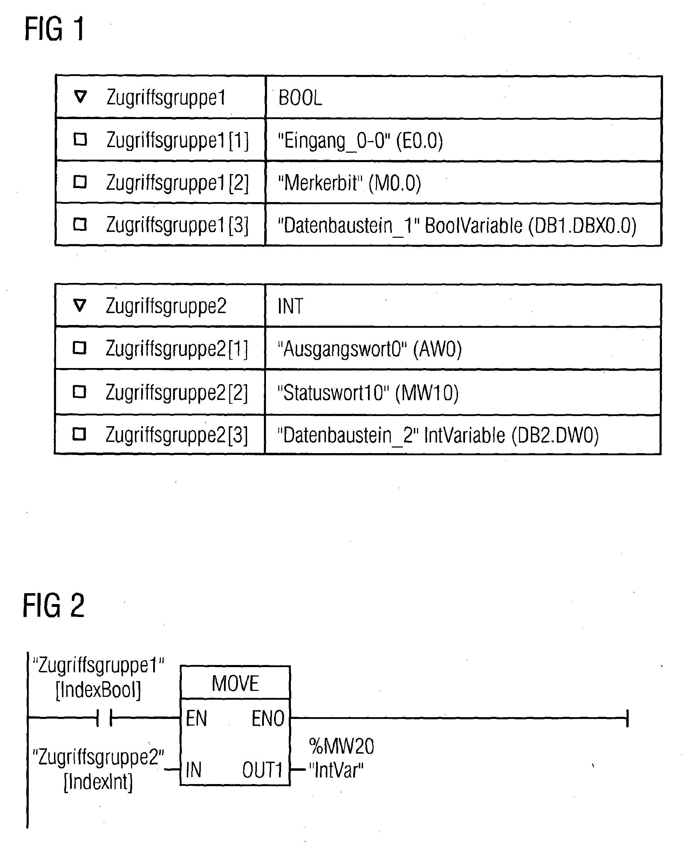

In der Figur 1 sind als Beispiel für eine Zuordnung von Adressen für Zellen eines Speichers oder ähnliche Zugriffe für eine indirekte Adressierung am Beispiel zweier Gruppen dargestellt, wobei in diesem Beispiel die Adressen nach Art einer Matrix bereits bei der Erstellung eines Programms (Engineering-Zeitpunkt) vordefiniert werden. Dabei sind in der Zugriffsgruppe1 Boolsche Adressen und in der Zugriffsgruppe2 Integer-Werte definiert. Die Adresse E0.0 mit dem Variablen-Namen "Eingang_0-0" und die Adresse AWO mit dem Variablen-Namen "Ausgangswort0" bezeichnen dabei keine eigentlichen Speicherzellen eines Arbeitsspeichers, sondern adressierbare Register einer Ein-/Ausgabebaugruppe einer speicherprogrammierbaren Steuerung.

Im vorliegenden Ausführungsbeispiel sind die beiden Matrizen Zugriffsgruppe1, Zugriffsgruppe2 in einem Datenbaustein eines Automatisierungsprogramms definiert. Alternativ (und nicht dargestellt) können in den beiden Matrizen Zugriffsgruppe1, Zugriffsgruppe2 Gruppen-granular oder Adressen-granular Berechtigungen eingetragen werden, die sich beispielsweise darauf beziehen, welche Funktionen, Unterprogramme oder dgl. jeweils schreibenden und/oder lesenden Zugriff auf die entsprechenden Adressen haben dürfen.

Die Strukturen, die in den Matrizen Zugriffsgruppe1, Zugriffsgruppe2 den Adressen und deren Variablen zugeordnet sind, sind im vorliegenden Ausführungsbeispiel die indizierten Variablen Zugriffsgruppe1[n], Zugriffsgruppe2[n]. Man könnte diese Strukturen auch als ein-dimensionale Matrizen handhaben. Die Strukturen, die in der jeweils ersten Zuordnungsspalte den Adressen E0.0, M0.0, ..., DB2DW0 bzw. den Variablen "Eingang_0-0", ..., "Datenbaustein_2" der zweiten Spalte zugeordnet sind, können alternativ (nicht dargestellt) jedoch auch aus einer Anzahl frei wählbarer Variablen-Namen bestehen. Die hier gezeigten indizierten Variablen sind jedoch insoweit von Vorteil, als dass diese Bezeichner mittels eines einfachen Programms leicht gebildet werden können, indem ein vordefinierter String, hier also "Zugriffsgruppe", um einen weiteren Buchstaben (hier: "1" oder "2") zur Erstellung des Gruppen-Namens erweitert wird, wobei anschließend durch ein einfaches Bestimmen einer ganzen Zahl der Index [1], ..., [3] erzeugt wird.

In einer vorteilhaften Ausgestaltung kann global für ein Programm oder für einzelne Routinen (z.B. Unterprogramme, Funktionen) ein direkter Zugriff auf die Adressen "Eingang_0-0", ..., "Datenbaustein_2" untersagt werden. Das heißt, dass fallweise die indirekte Adressierung mittels der in der Figur 1 dargestellten Tabellen zwingend vorgeschrieben werden kann.

Durch die Parametrierung der Zuordnungen mittels der Programmiersoftware ist es möglich, bei den Querverweisen der Variablen auch die Verwendungsstellen durch indirekte Adressierung anzuzeigen, womit eine Nachvollziehbarkeit hergestellt werden kann, die insbesondere bei großen Projekten und vielen Variablen-Zugriffen von Vorteil ist.

Es kann somit auf einfache Weise auf vordefinierte Ziele (Adressen, Speicherzellen) zugegriffen werden und bereits bei der Programmerstellung sichergestellt werden, dass in diesen indirekt adressierten Speicherbereichen tatsächlich valide Daten vorliegen bzw. gültige Zugriffe möglich sind. Die somit realisierten indirekten Zugriffe sind typsicher und können rein symbolisch programmiert werden. Hierdurch ist es möglich, auch Variablen in optimierten Datenbausteinen für die indirekte Adressierung nutzbar zu machen, wobei die Vorteile der indirekten Adressierung weiterhin erhalten bleiben. Optimierte Datenbausteine zeichnen sich dadurch aus, dass die Adressen ihrer Variablen nicht sichtbar sind und daher die bisherige indirekte Adressierung nicht angewendet werden kann.

In der Figur 2 ist in einem einfachen Ausführungsbeispiel einer grafisch orientierten Programmiersprache die Verwendung von Adressen mittels eines variablen Indexes dargestellt. Ein Funktionsbaustein "MOVE" weist dabei einen Aktivierungs-Schalter EN ("Enable") auf, der von einem externen Eingang "Eingang_0-0" (E0.0) angesteuert werden soll. Dieser Eingang E0.0 ist jedoch nicht in dem Programm direkt mit dem Eingang EN des Funktionsbausteins "MOVE" verknüpft, sondern mittels Verweis einer indirekten Adressierung, die auf ein Element der Struktur Zugriffsgruppe1 verweist, welches mit dem Inhalt der Variablen "IndexBool" referenziert wird. Dabei ist der Eingang E0.0 verknüpft, sofern der Index IndexBool der Variablen "Zugriffsgruppe1" den Wert 1 hat, dagegen ist der Statuswert "Merkerbit" (M0.0) in dem Fall referenziert, in dem die Variable IndexBool den Wert "2" enthält, usw.

Ebenso verhält es sich mit dem vom Baustein "MOVE" durchgeschalteten Wert, der in den Fällen, in denen an dem Eingang EN eine logische "1" anliegt, auf den Ausgang aus Out1 durchgeschaltet wird. Hier wird, gesteuert durch die Index-Variable IndexInt, wahlweise eine der Variablen "Ausgangswort0", "Statuswort10" oder "Datenbaustein_2" referenziert. Sofern die Index-Variablen IndexBool, IndexInt bei ihrer Verwendung mit den Variablen Zugriffsgruppe1, Zugriffsgruppe2 einen anderen Wert als 1, 2 oder 3 aufweisen, würde beim Zugriff mittels indirekter Adressierung ein Laufzeitfehler erkannt werden.

Am Beispiel der Figur 2 ist zu sehen, dass innerhalb des Anwenderprogramms die Adressen der Speicherzellen bzw. Ein-/Ausgänge überhaupt nicht verwendet werden müssen. Sofern die in der Figur 1 dargestellte Zuordnung in einem geschützten Speicherbereich gespeichert wird, kann die verwendete Hardware-Struktur und deren Adressen im erzeugten Source-Code, also dem Programm, "unsichtbar" bleiben. Dies kann ein ungewünschtes Re-Engineering einer Software erschweren und einen unautorisierten direkten Zugriff auf die direkten Adressen verhindern.

## Patentansprüche

1. Verfahren für die indirekte Adressierung einer Anzahl Zellen eines Speichers durch ein Programm einer Automatisierungskomponente in einer industriellen Automatisierungsanordnung,
wobei für einen Zugriff auf die Anzahl Zellen des Speichers die zugehörige Adresse (E0.0, ..., DB2.DW0) zur Laufzeit des Programms ermittelt wird,
**dadurch gekennzeichnet,**
**dass** im Zuge einer Erstellung des Programms eine Zuordnung (Zugriffsgruppe1, Zugriffsgruppe2) einer Struktur (Zugriffsgruppel[n], Zugriffsgruppe2[n]) zu zumindest einem Teil der vom Programm verwendbaren Adressen (E0.0, ..., DB2.DW0) erstellt und gespeichert wird,
**dass** zur Laufzeit durch das Programm für einen Zugriff auf die Anzahl Zellen des Speichers
- in einem ersten Schritt ein betreffendes Element der Struktur (Zugriffsgruppe1[n], Zugriffsgruppe2[n]) ermittelt wird,
- in einem zweiten Schritt aus der gespeicherten Zuordnung (Zugriffsgruppe1, Zugriffsgruppe2) die dem ermittelten Element zugeordnete Adresse (E0.0, ..., DB2.DW0) ausgelesen wird, und
- in einem dritten Schritt mittels der Adresse (E0.0, ..., DB2.DW0) auf die Anzahl Zellen des Speichers zugegriffen wird.

2. Verfahren nach Patentanspruch 1,
**dadurch gekennzeichnet,**
**dass** mit einem Zugriff auf die Anzahl Zellen des Speichers zumindest ein physikalischer Eingang (E0.0) oder zumindest ein physikalischer Ausgang (AWO) der Automatisierungskomponente oder einer mit der Automatisierungskomponente verknüpften Ein-/Ausgabeeinheit gelesen oder gesetzt wird.

3. Verfahren nach einem der vorhergehenden Patentansprüche,
**dadurch gekennzeichnet,**
**dass** anstelle der oder zusätzlich zur Adresse (E0.0, ..., DB2.DW0) eine Variable ("Eingang_0-0", ..., "Datenbaustein_2") verwendet wird, die die Anzahl Zellen des Speichers referenziert.

4. Verfahren nach einem der vorhergehenden Patentansprüche,
**dadurch gekennzeichnet,**
**dass** ein direkter Zugriff des Programms oder zumindest von Teilen des Programms auf die in der Zuordnung (Zugriffsgruppe1, Zugriffsgruppe2) referenzierten Adressen (E0.0, ..., DB2.DW0) gesperrt wird.

5. Verfahren nach einem der vorhergehenden Patentansprüche,
**dadurch gekennzeichnet,**
**dass** der zweite und der dritte Schritt des Verfahrens durch ein Betriebssystem oder durch eine Firmware der Automatisierungskomponente durchgeführt wird.

6. Verfahren nach einem der vorhergehenden Patentansprüche,
**dadurch gekennzeichnet,**
**dass** als die Zuordnung (Zugriffsgruppe1, Zugriffsgruppe2) eine Matrix oder eine Tabelle verwendet wird.

7. Verfahren nach einem der vorhergehenden Patentansprüche,
**dadurch gekennzeichnet,**
**dass** als die Struktur (Zugriffsgruppe1[n], Zugriffsgruppe2[n]) eine Anzahl Elemente einer indizierten Variablen oder ein eindimensionales Array verwendet wird.

8. Verfahren nach einem der vorhergehenden Patentansprüche,
**dadurch gekennzeichnet,**
**dass** die Zuordnung (Zugriffsgruppe1, Zugriffsgruppe2) zu mehreren Gruppen gruppiert wird und/oder dass mehrere Zuordnungen (Zugriffsgruppe1, Zugriffsgruppe2), die jeweils eine Gruppe darstellen, verwendet werden.

9. Verfahren nach Patentanspruch 8,
**dadurch gekennzeichnet,**
**dass** jede Gruppe zumindest ein eindimensionales Array als Struktur (Zugriffsgruppe1[n], Zugriffsgruppe2[n]) umfasst.

10. Verfahren nach Patentanspruch 8 oder 9,
**dadurch gekennzeichnet,**
**dass** mindestens einer der Gruppen eine Zugriffsberechtigung zugewiesen wird.

11. Verfahren nach Patentanspruch 10,
**dadurch gekennzeichnet,**
**dass** die Zugriffsberechtigung sich auf zumindest eine Funktion, einen Programmbaustein oder einen Programmteil bezieht, wobei nur berechtigte Funktionen, Programmbausteine oder Programmteile für einen Zugriff auf die der Gruppe zugehörigen Adressen (E0.0, ..., DB2.DW0) berechtigt wird.

12. Verfahren nach einem der vorhergehenden Patentansprüche,
**dadurch gekennzeichnet,**
**dass** die Zuordnung (Zugriffsgruppe1, Zugriffsgruppe2) in einem Datenbaustein oder ähnlichen Objekt des Programms gespeichert wird.

13. Automatisierungskomponente zum Einsatz in einer industriellen Automatisierungsanordnung,
wobei die Automatisierungskomponente für die indirekte Adressierung einer Anzahl Zellen eines Speichers durch ein Programm eingerichtet ist,
**dadurch gekennzeichnet,**
**dass** die Automatisierungskomponente zur Ausführung des ersten, zweiten und dritten Schritts in einem Verfahren gemäß einem der vorhergehenden Patentansprüche eingerichtet ist.

14. Automatisierungskomponente nach Patentanspruch 13,
**dadurch gekennzeichnet,**
**dass** die Automatisierungskomponente mit einer Firmware und/oder einem Betriebssystem ausgestattet ist, wobei die Firmware und/oder das Betriebssystem zur Ermittlung der in einer Zuordnung (Zugriffsgruppe1, Zugriffsgruppe2) gespeicherten Adressen (E0.0, ..., DB2.DW0) eingerichtet ist, wobei die Ermittlung anhand eines von dem Programm ermittelten Elements der in der Zuordnung (Zugriffsgruppe1, Zugriffsgruppe2) verwendeten Struktur (Zugriffsgruppe1[n], Zugriffsgruppe2[n]) vorgesehen ist.

## Claims

1. Method for the indirect addressing of a number of cells in a memory by a program of an automation component in an industrial automation arrangement,
wherein, for the purpose of accessing the number of cells in the memory, the associated address (E0.0, ..., DB2.DW0) is ascertained at the runtime of the program, **characterized**
**in that**, in the course of writing the program, an association (Access Group1, Access Group2) between a structure (Access Group1[n], Access Group2[n]) and at least a portion of the addresses (E0.0, ..., DB2.DW0) that can be used by the program is created and stored,
**in that** at runtime, for the purpose of accessing the number of cells in the memory, the program
- ascertains a relevant element of the structure (Access Group1[n], Access Group2[n]) in a first step,
- reads the address (E0.0, ..., DB2.DW0) associated with the ascertained element from the stored association (Access Group1, Access Group2) in a second step, and
- uses the address (E0.0, ..., DB2.DW0) to access the number of cells in the memory in a third step.

2. Method according to Patent Claim 1,
**characterized**
**in that**, upon access to the number of cells in the memory, at least one physical input (E0.0) or at least one physical output (AW0) of the automation component or of an input/output unit that is linked to the automation component is read or set.

3. Method according to either of the preceding patent claims,
**characterized**
**in that**, instead of or in addition to the address (E0.0, ..., DB2.DW0), a variable ("Input_0-0", ..., "Data Block_2") is used which references the number of cells in the memory.

4. Method according to one of the preceding patent claims,
**characterized**
**in that** direct access by the program or at least by portions of the program to the addresses (E0.0, ..., DB2.DW0) that are referenced in the association (Access Group1, Access Group2) is blocked.

5. Method according to one of the preceding patent claims,
**characterized**
**in that** the second and third steps of the method are performed by an operating system or by a piece of firmware in the automation component.

6. Method according to one of the preceding patent claims,
**characterized**
**in that** the association (Access Group1, Access Group2) used is a matrix or a table.

7. Method according to one of the preceding patent claims,
**characterized**
**in that** the structure (Access Group1[n], Access Group2[n]) used is a number of elements of an indexed variable or a one-dimensional array.

8. Method according to one of the preceding patent claims,
**characterized**
**in that** the association (Access Group1, Access Group2) is grouped to form a plurality of groups and/or in that a plurality of associations (Access Group1, Access Group2) which each represent a group are used.

9. Method according to Patent Claim 8,
**characterized**
**in that** each group comprises at least one one-dimensional array as a structure (Access Group1[n], Access Group2[n]).

10. Method according to Patent Claim 8 or 9,
**characterized**
**in that** at least one of the groups is assigned an access authorization.

11. Method according to Patent Claim 10,
**characterized**
**in that** the access authorization relates to at least one function, one program block or one program portion, wherein only authorized functions, program blocks or program portions are authorized for accessing the addresses (E0.0, ..., DB2.DW0) associated with the group.

12. Method according to one of the preceding patent claims,
**characterized**
**in that** the association (Access Group1, Access Group2) is stored in a data block or similar object of the program.

13. Automation component for use in an industrial automation arrangement,
wherein the automation component is set up for the indirect addressing of a number of cells in a memory by a program,
**characterized**
**in that** the automation component is set up to execute the first, second and third steps in a method according to one of the preceding patent claims.

14. Automation component according to Patent Claim 13,
**characterized**
**in that** the automation component is equipped with a piece of firmware and/or an operating system, wherein the firmware and/or the operating system is set up to ascertain the addresses (E0.0, ..., DB2.DW0) stored in an association (Access Group1, Access Group2), wherein the ascertainment is provided using an element - ascertained by the program - of the structure (Access Group1[n], Access Group2[n]) used in the association (Access Group1, Access Group2).

## Revendications

1. Procédé d'adressage indirect d'un certain nombre de cellules d'une mémoire par un programme d'un composant d'automatisation d'un agencement d'automatisation industriel,
dans lequel, pour accéder au certain nombre de cellules de la mémoire, on détermine l'adresse ( E0.0, ..., DB2.DW0 ) associée pour le temps d'exploitation du programme,
**caractérisé**
**en ce que**, au cours de l'établissement du programme, on établit et on mémorise une affectation ( groupe 1 d'accès, groupe 2 d'accès ) d'une structure ( groupe 1[n] d'accès, groupe 2[n] d'accès ) à au moins une partie des adresses ( E0.0, ..., DB2.DW0 ) utilisables par le programme,
**en ce que**, pour le temps d'exploitation par le programme pour accéder au certain nombre de cellules de la mémoire,
- on détermine, dans un premier stade, un élément concerné de la structure ( groupe 1[n] d'accès, groupe 2[n] d'accès ),
- on lit, dans un deuxième stade, à partir de l'association ( groupe 1 d'accès, groupe 2 d'accès ) mémorisée, l'adresse ( E0.0, ..., DB2.DW0 ) associée à l'élément déterminé et
- on accède, dans un troisième stade, au certain nombre de cellules de la mémoire à l'aide de l'adresse ( E0.0, ..., DB2.DW0 ).

2. Procédé suivant la revendication 1,
**caractérisé**
**en ce que**, par un accès au certain nombre de cellules de la mémoire, on lit ou on implante, au moins une entrée ( Ex.0 ) physique ou au moins une sortie ( AW0 ) physique du composant d'automatisation ou une unité entrée/sortie combinée au composant d'automatisation.

3. Procédé suivant l'une des revendications précédentes,
**caractérisé**
**en ce qu'**on utilise, au lieu de l'adresse ( E0.0, ..., DB2. DW0 ) ou en plus de celle-ci, une variable ( "entrée_0-0", ..., "module de données_2" ), qui référencie le certain nombre de cellules de la mémoire.

4. Procédé suivant l'une des revendications précédentes,
**caractérisé**
**en ce qu'**on bloque un accès direct du programme ou au moins de parties du programme aux adresses ( E0.0, ..., DB2.DW0 ) référencées dans l'association ( groupe 1 d'accès, groupe 2 d'accès ).

5. Procédé suivant l'une des revendications précédentes,
**caractérisé**
**en ce qu'**on effectue le deuxième et le troisième stades du procédé par un système de service ou par un logiciel frimware du composant d'automatisation.

6. Procédé suivant l'une des revendications précédentes,
**caractérisé**
**en ce qu'**on utilise une matrice ou un tableau comme association ( groupe 1 d'accès, groupe 2 d'accès ).

7. Procédé suivant l'une des revendications précédentes,
**caractérisé**
**en ce qu'**on utilise, comme structure ( groupe 1[n] d'accès, groupe 2[n] d'accès ), un certain nombre d'éléments d'une variable munie d'indices ou une matrice à une dimension.

8. Procédé suivant l'une des revendications précédentes,
**caractérisé**
**en ce qu'**on regroupe l'association ( groupe 1 d'accès, groupe 2 d'accès ) en plusieurs groupes et/ou en ce qu'on utilise plusieurs associations ( groupe 1 d'accès, groupe 2 d'accès ), qui représente respectivement un groupe.

9. Procédé suivant la revendication 8,
**caractérisé**
**en ce que** chaque groupe comprend au moins une matrice à une dimension comme structure ( groupe 1[n] d'accès, groupe 2[n] d'accès ).

10. Procédé suivant la revendication 8 ou 9,
**caractérisé**
**en ce qu'**on affecte une habilitation d'accès à au moins l'un des groupes.

11. Procédé suivant la revendication 10,
**caractérisé**
**en ce que** l'habilitation d'accès se rapporte à au moins une fonction, à un module de programme ou à une partie de programme, seules des fonctions des modules de programmes ou des parties de programme habilitées étant habilitées à un accès aux adresses ( E0.0, ..., DB2.DW0 ) associées au groupe.

12. Procédé suivant l'une des revendications précédentes,
**caractérisé**
**en ce qu'**on mémorise l'association ( groupe 1 d'accès, groupe 2 d'accès ) dans un module de données ou dans un objet semblable du programme.

13. Composant d'automatisation à utiliser dans un agencement d'automatisation industriel,
dans lequel le composant d'automatisation est conçu pour l'adressage indirect d'un certain nombre de cellules d'une mémoire par un programme,
**caractérisé**
**en ce que** le composant d'automatisation est conçu pour l'exécution du premier, deuxième et troisième stades dans un procédé suivant l'une des revendications précédentes.

14. Composant d'automatisation suivant la revendication 13,
**caractérisé**
**en ce que** le composant d'automatisation est équipé d'un logiciel frimware et/ou d'un système de service, le logiciel frimware et/ou le système de service étant conçu pour la détermination des adresses ( E0.0, ..., DB2.DW0 ) mémorisées dans une association ( groupe 1 d'accès, groupe 2 d'accès ), la détermination étant prévue au moyen d'un élément déterminé par le programme de la structure ( groupe 1[n] d'accès, groupe 2[n] d'accès ) utilisée dans l'association ( groupe 1 d'accès, groupe 2 d'accès ).
